# FASCICULE DE BREVET EUROPEEN

(11) **EP 0 920 594 B1**
(45) Date de publication et mention de la délivrance du brevet: **17.07.2002**
(21) Numéro de dépôt: 98932229.2
(22) Date de dépôt: 17.06.1998
(51) Int. Cl.: F16D 13/58, F16D 13/75

(54) **MECANISME D'EMBRAYAGE POUR EMBRAYAGE A FRICTION A EFFORT DE DEBRAYAGE ASSISTE**
KUPPLUNGSMECHANISMUS FÜR EINE REIBUNGSKUPPLUNG MIT HILFSKRAFTBETÄTIGUNG
CLUTCH MECHANISM FOR FRICTION CLUTCH WITH BOOST DECLUTCHING EFFORT

(30) Priorité: 19.06.1997 FR 9707642
(43) Date de publication de la demande: 09.06.1999
(73) Titulaire: VALEO, 75017 Paris (FR)
(72) Inventeur: MINEREAU, Hugues, F-93240 Stains (FR)
(74) Mandataire: Gamonal, Didier
(86) Numéro de dépôt international: FR9801278
(87) Numéro de publication internationale: WO9858184

(56) Documents cités:
- DE-U- 29 508 087
- FR-A- 2 536 141
- FR-A- 2 558 549
- FR-A- 2 564 545

## Description

La présente invention concerne les embrayages à friction à faible effort de débrayage assisté, notamment pour véhicules automobiles, et se rapporte plus particulièrement au mécanisme d'embrayage que comporte un tel embrayage.

Ainsi qu'on le sait, dans un embrayage classique intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire en rotation d'un premier arbre, tel qu'un arbre menant, tandis que la friction d'embrayage présente à sa périphérie interne un moyeu pour son calage en rotation sur un deuxième arbre, tel qu'un arbre mené.

L'embrayage est donc normalement engagé, ou embrayé, avec transmission de couple entre les arbres menant et mené.

Pour désengager, ou débrayer l'embrayage, il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction. Le couple n'est alors plus transmis de l'arbre menant à l'arbre mené, car les garnitures de friction ne sont plus serrées entre les plateaux de pression et de réaction solidaires en rotation du couvercle de forme creuse.

Usuellement, le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression au couvercle.

Le diaphragme, ainsi qu'on le sait, est troué centralement et comporte une partie périphérique externe en forme de rondelle Belleville prolongée vers l'intérieur par une partie centrale fragmentée en doigts radiaux par des fentes. Ce diaphragme, par sa partie rondelle Belleville, prend appui sur le couvercle et sur le plateau de pression. Ainsi, le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre, ce diaphragme a une forme tronconique. Une fois monté dans l'embrayage, sa rondelle Belleville est montée sous précontrainte et est plus ou moins aplatie. Lors de l'opération de débrayage, ou désengagement de l'embrayage, on modifie la conicité de sa rondelle Belleville.

Ainsi qu'on le sait, la courbe caractéristique de ce diaphragme, qui représente la force exercée en fonction de la course de débrayage, par exemple ramenée au niveau de l'extrémité interne des doigts du diaphragme, est déterminée par les dimensions de sa rondelle Belleville, notamment par le rapport entre la hauteur du tronc de cône de la rondelle Belleville à l'état libre et l'épaisseur du diaphragme.

Cette courbe caractéristique passe usuellement par un maximum.

Ainsi, la force à exercer sur l'extrémité interne des doigts du diaphragme, pendant l'opération de débrayage, augmente jusqu'à un maximum, diminue graduellement jusqu'à un minimum, puis augmente à nouveau.

La différence entre le maximum et le minimum peut être importante. Pour plus de précisions sur cette courbe caractéristique, on se reportera par exemple au document FR-A-1 392 569.

Le document FR-A-2 564 545 décrit une mécanisme d'embrayage, comprennant un diaphragme comportant une zone annulaire de pivotement fixe entre deux portées annulaires ménagées sur une pluralité de languettes élastiques radiales découpées dans un couvercle du mécanisme d'embrayage, pour éliminer jeu.

Dans le document FR-A-1 392 569, on a prévu un dispositif élastique de progressivité pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition, on obtient un effort de débrayage globalement croissant au niveau de la butée de débrayage.

On ne peut obtenir lors de la course de débrayage une assistance aussi grande que souhaitée, le dispositif de progressivité diminuant la charge exercée par le diaphragme sur le plateau de pression lors du débrayage.

Les courbes de charge du dispositif de progressivité, usuellement monté au sein de la friction d'embrayage, et du diaphragme ont des formes ne permettant pas de les combiner pour obtenir une forte assistance au débrayage, en particulier si l'on veut respecter des courses et efforts de débrayages compatibles avec les commandes de débrayage actuelles. Par ailleurs, la forme de la courbe du dispositif de progressivité évolue très rapidement avec la vie de l'embrayage, ceci annulant d'autant plus l'assistance au débrayage que le niveau d'assistance demandé est élevé. Pour éviter le vieillissement de la courbe du dispositif d'assistance, il est préférable de placer celui-ci en un endroit où sa courbe de raideur restera stable dans le temps, et, en particulier, en un endroit placé en dehors de la zone de progressivité de la friction où le contact garnitures et le phénomène d'incrustations évoluent et font évoluer la courbe de progressivité.

On peut alors songer à faire intervenir un ressort d'assistance en parallèle avec le diaphragme. Dans ce cas, le ressort d'assistance, par exemple en forme de rondelle Belleville, peut prendre appui sur le couvercle et sur l'extrémité interne des doigts du diaphragme.

En position embrayage engagé, il peut alors exercer une force minimum, puis, sa conicité variant, exercer une force d'assistance lors de l'opération de débrayage. Il faut donc que cette force d'assistance soit minimum en position embrayage engagé tout au long de la durée de vie de l'embrayage.

On a déjà proposé des mécanismes d'embrayages de ce genre ; un tel mécanisme est par exemple décrit dans le document FR-A-2 728 638.

La présente invention a pour objet de créer, de manière simple et économique, un embrayage à friction à faible effort de débrayage.

Ainsi, selon l'invention, un mécanisme d'embrayage pour embrayage à friction, notamment pour véhicules automobiles, comportant un couvercle avec un fond d'orientation transversale et des moyens de fixation pour fixation du mécanisme d'embrayage sur un volant d'entraînement en rotation, un plateau de pression présentant frontalement une face de friction pour coopération avec une friction d'embrayage, des moyens pour liaison en rotation, avec mobilité axiale, du plateau de pression avec le couvercle, et, interposé entre le plateau de pression et le fond du couvercle, un diaphragme ayant une partie périphérique externe sollicitant axialement le plateau de pression en direction opposée du fond du couvercle et prolongée vers l'intérieur par des doigts pour contrecarrer à volonté l'action de ladite partie périphérique, des moyens élastiques d'assistance agissant sur les doigts du diaphragme dans le sens du débrayage en prenant appui sur le couvercle, est caractérisé par le fait que les moyens élastiques d'assistance font partie intégrante du fond du couvercle.

Avantageusement, lorsque les moyens élastiques d'assistance agissent en parallèle avec le diaphragme, les caractéristiques élastiques des moyens d'assistance sont choisies en sorte que, lorsque l'embrayage est embrayé, la friction d'embrayage étant neuve, l'action exercée par lesdits moyens d'assistance est faible.

Les caractéristiques élastiques des moyens d'assistance sont alors de préférence choisies en sorte que, pendant l'opération de débrayage, l'action exercée par lesdits moyens d'assistance croît puis décroît jusqu'à une valeur très faible voire nulle l'embrayage étant débrayé.

Avantageusement, les moyens élastiques d'assistance comprennent des extensions s'étendant globalement vers l'extrémité libre des doigts du diaphragme ; lesdites extensions s'étendent radialement.

De préférence, le mécanisme étant du type poussé, les extensions sont placées radialement en dessous des appuis primaire et secondaire pour le diaphragme portés par le fond du couvercle ; les extensions sont reliées à leurs extrémités par un anneau destiné à coopérer avec les doigts du diaphragme. Les moyens élastiques d'assistance agissent alors en parallèle avec le diaphragme. Bien entendu, les moyens élastiques d'assistance peuvent agir en série avec le diaphragme.

Ainsi, en variante, le mécanisme étant également du type poussé, les extensions portent l'appui primaire pour le diaphragme ; pour assurer un bon fonctionnement de l'embrayage et éviter que le diaphragme quitte son appui primaire à la fin de l'opération de débrayage, les extensions sont attelées axialement au diaphragme ; ledit attelage axial est assuré par une rondelle d'attelage maintenue par un rebord globalement parallèle aux extensions prolongeant un retour s'étendant axialement en traversant des trous du diaphragme, dans lesquels débouchent les fentes radiales délimitant les doigts du diaphragme, et prolongeant lui-même les extrémités libres des extensions.

Avantageusement, l'appui secondaire pour le diaphragme est constitué par des rebords transversaux prolongeant des retours axiaux traversant des trous du diaphragme, dans lesquels débouchent les fentes radiales délimitant les doigts du diaphragme, lesdits retours axiaux prolongeant eux-mêmes des pattes rigides découpées dans le fond du couvercle, l'appui secondaire étant disposé radialement intérieurement par rapport à l'appui primaire ; chaque patte rigide est circonférentiellement disposée entre deux extensions. Ce n'est qu'à la fin de l'opération de débrayage qu'intervient l'appui secondaire, après que le dispositif de progressivité, monté de manière connue au sein de la friction d'embrayage, ne fait plus sentir ses effets. Grâce à l'appui secondaire, on garantit que le plateau de pression ne soit plus en contact avec les garnitures de friction entre lesquelles intervient le dispositif de progressivité, les languettes élastiques assurant un décollement du plateau de pression par rapport auxdites garnitures. En variante, ce sont les languettes élastiques qui assurent à elles seules le décollement du plateau de pression, l'action de rappel, en direction du fond du couvercle, qu'exercent les languettes élastiques sur le plateau de pression étant dimensionnée en conséquence.

De préférence, le couvercle est dans ce cas de forme creuse.

La force d'assistance des moyens élastiques d'assistance a alors une courbe caractéristique, représentant la charge exercée en fonction du déplacement, de forme linéaire.

En position embrayage engagé, la force d'assistance est maximum puis décroît lors de l'opération de débrayage.

La charge du diaphragme décroît également lors de cette opération.

Bien entendu, dans tous les cas, le dispositif de progressivité participe à l'assistance pendant une partie de la course de débrayage.

Il est intéressant de faire appel à un dispositif de réglage, dit dispositif de rattrapage d'usure, qui maintient le diaphragme toujours globalement dans la même position, quelle que soit l'usure des garnitures de friction de l'embrayage et/ou des faces de friction des plateaux de pression et de réaction, pour que les moyens élastiques d'assistance conservent, en toute circonstance lors de la durée de vie de l'embrayage, leurs caractéristiques élastiques choisies lorsque l'embrayage est en position engagée ou embrayée, et lors du débrayage.

Ainsi, avantageusement, le mécanisme selon l'invention est équipé d'un dispositif de rattrapage d'usure d'au moins des garnitures de la friction d'embrayage.

La description qui va suivre illustre l'invention en regard des dessins annexés dans lesquels :
- la figure 1 est une demi-vue en coupe axiale d'un mécanisme d'embrayage selon l'invention du type poussé en position embrayage engagé ;
- la figure 2 est une vue partielle selon la flèche II de la figure 1 du couvercle seul ;
- la figure 3 est une demi-vue en coupe axiale analogue à la figure 1 montrant une variante de mécanisme selon l'invention, en coupe selon III-III de la figure 4 ;
- la figure 4 est une vue partielle de face du mécanisme d'embrayage selon la figure 3 ;
- la figure 5 est une vue en coupe selon V-V de la figure 4 ;
- les figures 6 et 7 correspondent respectivement aux figures 5 et 3 et montrent la position des pièces dans une phase de débrayage ;
- la figure 8 montre en coupe partielle le mécanisme seul en position de stockage.

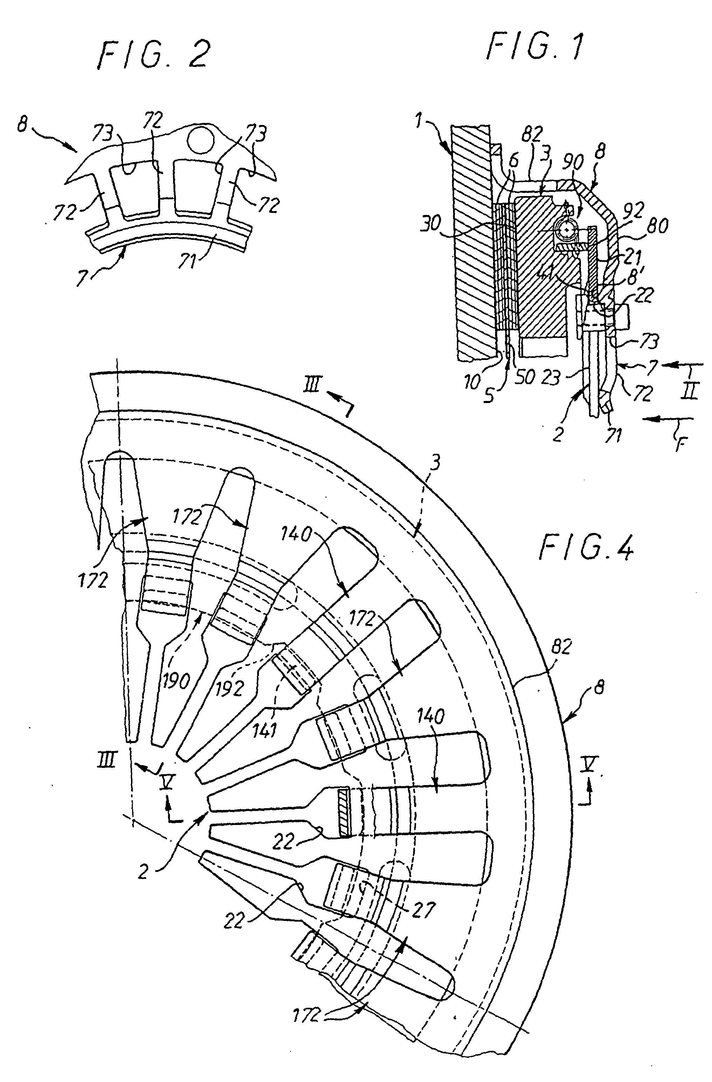

Un embrayage, tel que représenté sur les figures 1 et 2, comporte un ensemble de pièces de forme annulaire, à savoir successivement axialement un volant 1 d'entraînement en rotation pour fixation de l'embrayage à un premier arbre, tel qu'un arbre menant, une friction d'embrayage 5 présentant à sa périphérie externe des garnitures de friction 6 et à sa périphérie interne un moyeu, non représenté, pour liaison en rotation de l'embrayage avec un second arbre tel qu'un arbre mené, un plateau de pression 3, un couvercle 8 de forme creuse présentant un fond 80 globalement d'orientation transversale et, à sa périphérie externe, des moyens de fixation pour fixation du couvercle 8 au volant 1 formant plateau de réaction.

Le volant 1 présente dorsalement une face de friction 10 et centralement des trous pour sa fixation à l'aide de vis à l'arbre menant. Le volant 1 est d'un seul tenant en étant en matière moulable tout comme le plateau de pression 3 qui présente frontalement une face de friction 30 en regard de la face de friction 10 du volant 1.

Le volant 1 et le plateau de pression 3 sont en fonte.

La friction d'embrayage 5 présente également un disque de support 50 pour porter les garnitures de friction 6, éventuellement fractionnées. Ces garnitures 6 s'étendent de part et d'autre du disque de support 50 en étant fixées à celui-ci par exemple par rivetage, par collage ou brasage au disque de support 50 métallique.

De manière connue, des moyens élastiques de progressivité à action axiale, constituant un dispositif de progressivité, sont interposés entre les deux garnitures 6 pour serrage progressif de celles-ci entre le volant 1 et le plateau de pression 3. Ces moyens peuvent avoir toute forme appropriée. Ces moyens sont par exemple réalisés en conformant le disque de support 50. Ce disque 50, à titre non limitatif, peut présenter une partie centrale pour sa liaison, de manière élastique ou non, au moyeu et une partie périphérique fragmentée en pales radiales, par exemple du type tripode. Chaque pale présente alors une zone centrale de portée destinée à la fixation de l'une des garnitures de friction 6 et deux zones périphériques externes de portée destinées à coopérer avec l'autre des garnitures de friction 6.

Comme mentionné ci-dessus, le disque de friction 50 peut être accouplé de manière élastique au moyeu. En variante, le disque de friction 50 est accouplé de manière rigide au moyeu, le volant 1 étant alors divisé pour présenter deux masses accouplées de manière élastique entre elles par des ressorts à action circonférentielle ou radiale.

En variante, le volant 1 peut être en deux parties et comporter un flasque de support fixé à sa périphérie interne à l'arbre menant et à sa périphérie externe à un plateau de réaction présentant la face de friction 10. Le couvercle 8 peut être alors assemblé au volant en deux parties à l'aide de pattes d'orientation axiale issues de sa jupe périphérique cylindrique 82. Ces pattes, en forme de tenons, sont alors engagées dans des mortaises formées à la périphérie externe du plateau de réaction ou du flasque de support. Le tronçon libre des pattes, formant les moyens de fixation précités du couvercle 8, peut être fixé par sertissage, rabattement ou soudage, au flasque ou au plateau de réaction, comme décrit par exemple dans la demande de brevet français 95 12523 déposée le 24 octobre 1995.

Ici, le couvercle 8 a une forme classique.

S'agissant d'une application pour véhicule automobile, l'arbre menant est l'arbre moteur du véhicule sur le vilebrequin duquel se fixe le volant 1, tandis que l'arbre mené consiste en l'arbre d'entrée de la boite de vitesses.

Bien entendu, il est possible d'inverser les structures, le premier arbre pouvant être un arbre mené et le deuxième arbre un arbre menant.

Sur cette figure, le plateau de pression 3 est lié en rotation avec le couvercle 8 par des languettes élastiques non représentées permettant au plateau de pression 3 de se déplacer axialement par rapport au couvercle 8. Le plateau de pression 3 est donc solidaire en rotation du couvercle 8 et du volant, tout en étant mobile axialement par rapport à ceux-ci.

Les languettes élastiques sont d'orientation tangentielle et sollicitent le plateau de pression 3 en direction du fond 80 du couvercle. Ces languettes élastiques sont donc à action axiale et ont une action de rappel. En variante, les languettes peuvent être d'orientation radiale.

La jupe cylindrique 82 du couvercle 8 est trouée localement pour passage de pattes, que présente en saillie radiale le plateau de pression 3. Les languettes élastiques sont fixées à l'une de leurs extrémités auxdites pattes du plateau de pression 3 et à leur autre extrémité à une plage radiale du couvercle. Ces languettes élastiques sont réparties régulièrement circonférentiellement, de manière connue ; leur nombre, ainsi que celui des pattes, dépend des applications, sachant que, pour les véhicules de tourisme, on fait généralement appel à trois languettes élastiques ou groupes de languettes.

La fixation de ces languettes élastiques sur les plages du couvercle et sur les pattes du plateau de pression 3 est réalisée à l'aide d'organes de fixation, usuellement des rivets, en variante des vis ou des boulons.

Le plateau de pression 3 est déplaçable axialement sous la sollicitation de moyens embrayeurs à action axiale commandés par des moyens débrayeurs, ici un diaphragme 2 monté articulé sur le couvercle 8 ; le diaphragme 2, comme on le sait, comprend une partie périphérique 21 en forme de rondelle Belleville prolongée intérieurement par des doigts 23 séparés par des fentes radiales qui débouchent dans des trous 22 placés à la périphérie interne de la partie périphérique 21 du diaphragme 2.

Ici, l'embrayage est du type poussé, c'est-à-dire qu'il faut, à l'aide d'une butée de débrayage non représentée, agir en poussant sur l'extrémité interne des doigts 23, pour désengager l'embrayage, dans le sens correspondant à la flèche F. Pour ce faire, le fond 80 du couvercle 8 porte, d'une part, un appui primaire 81 consistant ici en un embouti réalisé dans le fond 80 du couvercle 8 et, d'autre part, un appui secondaire 41 constitué par un bord arrondi réalisé à la périphérie externe d'une tête de colonnette 4 dont le corps traverse des trous 22 du diaphragme 2 et qui est solidarisée au couvercle 8 par rivetage, les appuis primaire 81 et secondaire 41 étant radialement au droit l'un de l'autre.

Pour assurer une parfaite constance de l'effort de serrage, le mécanisme d'embrayage est équipé d'un dispositif de rattrapage d'usure 90 ; le dispositif 90 est par exemple du genre de celui qui a été décrit en détails dans le document FR-A-2 740 191 auquel il conviendra de se reporter pour plus d'informations ; bien entendu, tout type de dispositif de rattrapage d'usure convient, tel que par exemple celui qui est décrit dans le document DE-A-44 12 107 ; on rappellera simplement ici qu'un dispositif de rattrapage d'usure comprend en général des moyens à rampes ayant des rampes inclinées disposées circonférentiellement ; ils sont constitués d'un anneau en tôle découpée et emboutie de façon à présenter des rampes disposées circonférentiellement, ledit anneau présentant également des zones d'appui 92 ; le plateau de pression 3 présente, sur sa face tournée vers le fond du couvercle 8, des plots ou contre-rampes répartis circonférentiellement et destinés à coopérer chacun avec une rampe.

Les moyens à rampes sont placés axialement entre la partie périphérique 21 du diaphragme 2 et le plateau de pression 3 en sorte que les plots ou contre-rampes du plateau de pression 2 reçoivent les rampes, et la partie périphérique 21 du diaphragme 2 coopère avec les zones d'appui 92 qui constituent ainsi les moyens d'appui par l'intermédiaire desquels le diaphragme 2 agit sur le plateau de pression 3.

Des moyens élastiques d'assistance 7 sont disposés entre le couvercle 8 et le diaphragme 2 en sorte qu'ils sont adaptés à agir sur le diaphragme 2 dans le sens du débrayage de l'embrayage.

Plus précisément, et selon l'invention, les moyens élastiques 7 sont obtenus en prolongeant la matière du fond 80 du couvercle 8, radialement vers l'axe de l'embrayage, selon une partie dite intérieure élastique ; cette partie intérieure élastique comprend des extensions 72, ici radiales, s'étendant globalement vers l'extrémité libre des doigts 23 du diaphragme 2, reliées à leurs extrémités par un anneau 71, en sorte que sont définies des ouvertures 73, ici de forme générale trapézoïdale ; l'anneau 71 est destiné à coopérer directement avec les doigts 23 du diaphragme 2.

On comprendra qu'en choisissant le nombre et la forme des ouvertures 73, donc le nombre et la forme des extensions 72, ainsi que la largeur radiale de l'anneau 71 et l'épaisseur de la tôle utilisée pour réaliser le couvercle 8, il est possible de donner à cette partie intérieure élastique, qui constitue les moyens élastiques d'assistance 7, les caractéristiques élastiques désirées.

Les moyens élastiques d'assistance 7 agissent en série avec le diaphragme 2 et ont ici des caractéristiques élastiques telles que, lorsque l'embrayage est embrayé et que les garnitures 6 de la friction 5 d'embrayage sont neuves, ils ne génèrent qu'un faible effort axial sur les doigts 23 du diaphragme 2 ; l'effort de serrage des garnitures 6 pincées entre le plateau de réaction et le plateau de pression 3 est pratiquement celui qui est donné par la partie périphérique 21 du diaphragme 2 ; lorsque l'on agit sur les doigts 23 du diaphragme 2 dans le sens de la flèche F, pour le débrayage de l'embrayage, les moyens élastiques d'assistance 7 agissent en pression sur les doigts 23 du diaphragme 2, dans le sens de la flèche F, soulageant ainsi l'effort nécessaire au débrayage ; on s'arrange également pour qu'en fin d'opération de débrayage les moyens élastiques d'assistance 7 ne transmettent aucun effort au diaphragme 2, les languettes élastiques précitées assurant un décollement du plateau de pression 3 par rapport aux garnitures 6.

Grâce à la présence du dispositif de rattrapage d'usure 90, les positions du diaphragme 2 et des moyens élastiques d'assistance 7, à l'embrayage et au débrayage, sont fixes, indépendantes de l'usure des garnitures : l'assistance au débrayage fournie par les moyens élastiques d'assistance 7 est donc indépendante de cette usure, ainsi que l'effort de serrage.

Comme on le voit, grâce à l'invention, des moyens élastiques d'assistance 7 ont été associés à un diaphragme et à un dispositif de rattrapage d'usure de manière extrêmement simple ; par ailleurs, le nombre de pièces est réduit, ce qui facilite la fabrication du mécanisme d'embrayage.

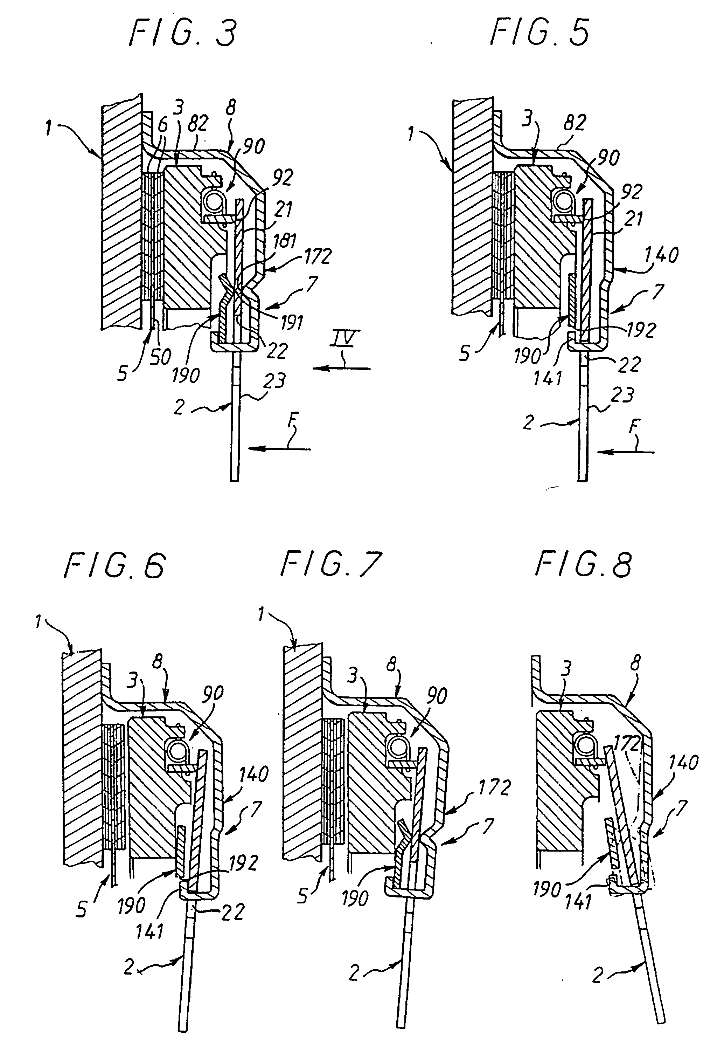

Les figures 3 à 8 montrent une variante de mécanisme d'embrayage selon l'invention dans laquelle les moyens élastiques d'assistance agissent en série avec le diaphragme 2 ; sur ces figures, les pièces identiques à celles des variantes précédentes, ou jouant le même rôle, portent les mêmes références. Ici, l'appui primaire 181 du diaphragme 2 sur le couvercle 8 est réalisé sous forme d'emboutis dirigés vers le plateau de pression 3 et ménagés transversalement dans des extensions 172 radiales élastiques constituant les moyens élastiques d'assistance 7 : le débrayage de l'embrayage est obtenu en agissant sur les extrémités des doigts 23 du diaphragme 2 dans le sens de la flèche F de la figure 3, dans les conditions décrites ci-dessous.

Les extensions 172 ont ici une forme globalement d'abord trapézoidale, se raccordant au reste du couvercle 8 selon la grande base du trapèze, puis rectangulaire, la largeur du rectangle correspondant à la petite base du trapèze : c'est à la jonction des formes trapézoïdale et rectangulaire que sont situés les appuis primaires 181.

Les extensions 172 sont attelées axialement à la partie périphérique 21 du diaphragme 2 ; pour ce faire, ici leurs extrémités libres sont prolongées par un retour à quatre-vingt-dix-degrés, s'étendant donc axialement en traversant des trous 22 du diaphragme 2, ledit retour étant lui-même prolongé également à quatre-vingt-dix degrés vers l'extérieur, globalement donc parallèlement aux extensions 172, par un rebord pour maintien d'une rondelle d'attelage 190 présentant, au droit des extensions 172, un embouti 191 faisant face à l'appui primaire 181 ; la partie périphérique 21 du diaphragme 2 est ainsi pincée entre les emboutis 191 de la rondelle d'attelage 190 et les appuis primaires 181 des extensions 172 ; au droit des extensions 172, cette partie périphérique 21 présente sur son bord intérieur des échancrures 27 agrandissant radialement les trous 22 pour faciliter le débattement du diaphragme 2.

Pour basculement du diaphragme 2 lors de l'opération de débrayage, un appui secondaire 141, pour le diaphragme 2, est prévu : cet appui secondaire 141 est constitué par des rebords transversaux, figure 5, dirigés vers l'extérieur, prolongeant des retours axiaux traversant des trous 22 du diaphragme 2 et prolongeant eux-mêmes des pattes rigides 140 découpées dans le fond 80 du couvercle 8 ; au droit desdits rebords transversaux constituant l'appui secondaire 141, la rondelle d'attelage 190 présente des échancrures 192 pour éviter qu'elle n'interfère avec lesdits rebords.

En se reportant à la figure 4 qui représente en partie un tiers du mécanisme, on voit qu'il y a quatre extensions 172 élastiques et deux pattes 140 rigides ; le mécanisme comporte donc au total douze extensions 172 et six pattes 140 ; la répartition circonférentielle est telle que chaque patte 140 est comprise entre, d'un côté, trois extensions 172 qui se suivent et, de l'autre côté, une extension 172.

Comme dans la variante précédente, les caractéristiques élastiques des extensions 172, qui constituent les moyens élastiques d'assistance 7, sont obtenues par la forme et l'épaisseur desdites extensions 172 ; bien que ceci ne soit pas visible à l'échelle des dessins, ici les extensions 172 élastiques ont une épaisseur légèrement inférieure à celle des pattes 140 rigides. En variante, les extensions 172 et les pattes 140 ont même épaisseur et les pattes 140 présentent des nervures de raidissement assurant leur rigidité.

Lorsque, pour effectuer l'opération de débrayage, une action est réalisée dans le sens de la flèche F sur l'extrémité des doigts 23, dans une première phase le diaphragme 2 bascule autour des zones d'appui 92 ; cette première phase dure jusqu'au moment où le diaphragme 2 prend contact avec l'appui secondaire 141 autour duquel il bascule ensuite dans une deuxième phase, comme le montre la figure 6 ; lors de ces deux phases, l'opération de débrayage est assistée par les moyens élastiques d'assistance 7, lors de la première phase grâce à l'appui primaire 181 et, dans la deuxième phase, grâce aux emboutis 191 de la rondelle d'attelage 190 qui évitent un décollement du diaphragme par rapport à l'appui primaire 181.

La figure 8 montre le mécanisme qui vient d'être décrit dans la position de stockage ; sur cette figure, on voit en partie pleine les pattes rigides 140 et en traits mixtes les extensions élastiques 172 ; en fixant le couvercle 8 sur le plateau de réaction 1, on déforme les extensions 172, qui alors exercent une force d'assistance qui décroît lors de l'opération de débrayage, la caractéristique des moyens d'assistance étant de forme linéaire.

Bien entendu, la présence de la rondelle d'attelage 190 et de l'appui secondaire 141 n'est pas obligatoire. En effet, les languettes élastiques peuvent remplacer l'appui secondaire 141 et éviter que le diaphragme décolle de son appui primaire 181 ; pour cela, il faut dimensionner les languettes en conséquence.

Bien entendu, le couvercle 8 peut avoir une forme moins profonde, voire plate. Pour cela, il suffit de doter le plateau de réaction 1 d'une jupe d'orientation axiale entourant les garnitures de friction 6 et, au moins en partie, le plateau de pression 3.

## Revendications

1. Mécanisme d'embrayage pour embrayage à friction, notamment pour véhicules automobiles, comportant un couvercle (8) avec un fond (80) d'orientation transversale et des moyens de fixation pour fixation du mécanisme d'embrayage sur un volant d'entraînement en rotation, un plateau de pression (3) présentant frontalement une face de friction (30) pour coopération avec une friction d'embrayage (5), des moyens pour liaison en rotation, avec mobilité axiale, du plateau de pression (3) avec le couvercle (8), et, interposé entre le plateau de pression (3) et le fond (80) du couvercle (8), un diaphragme (2) ayant une partie périphérique externe (21) sollicitant axialement le plateau de pression (3) en direction opposée du fond (80) du couvercle (8) et prolongée vers l'intérieur par des doigts (23) pour contrecarrer à volonté l'action de ladite partie périphérique (21), des moyens élastiques d'assistance (7) agissant sur les doigts (23) du diaphragme (2) dans le sens du débrayage en prenant appui. sur le couvercle (8), **caractérisé par le fait que** les moyens élastiques d'assistance (7) font partie intégrante du fond (80) du couvercle (8).

2. Mécanisme selon la revendication 1, **caractérisé par le fait que** les caractéristiques élastiques des moyens élastiques d'assistance (7) sont choisies en sorte que, lorsque l'embrayage est embrayé, la friction d'embrayage (5) étant neuve, l'action exercée par les moyens élastiques d'assistance (7) est faible.

3. Mécanisme selon l'une des revendications 1 ou 2, **caractérisé par le fait que** les caractéristiques élastiques des moyens élastiques d'assistance (7) sont choisies en sorte que, pendant l'opération de débrayage, l'action exercée par les moyens élastiques d'assistance (7) croît puis décroît jusqu'à une valeur très faible voire nulle l'embrayage étant débrayé.

4. Mécanisme selon l'une des revendications 1 à 3, **caractérisé par le fait que** les moyens élastiques d'assistance (7) comprennent des extensions (72, 172) s'étendant globalement vers l'extrémité libre des doigts (23) du diaphragme (2).

5. Mécanisme selon la revendication 4, **caractérisé par le fait que** lesdites extensions (72, 172) s'étendent radialement.

6. Mécanisme selon l'une des revendications 4 ou 5, le mécanisme étant du type poussé, **caractérisé par le fait que** les extensions (72) sont placées radialement en dessous des appuis primaire (81) et secondaire (41) pour le diaphragme (2) portés par le fond (80) du couvercle (8).

7. Mécanisme selon la revendication 6, **caractérisé par le fait que** les extensions (72) sont reliées à leurs extrémités par un anneau (71) destiné à coopérer avec les doigts (23) du diaphragme (2).

8. Mécanisme selon l'une des revendications 4 à 6, le mécanisme étant du type poussé, **caractérisé par le fait que** les extensions (172) portent l'appui primaire (181) pour le diaphragme (2).

9. Mécanisme selon la revendication 8, **caractérisé par le fait que** les extensions (172) sont attelées axialement au diaphragme (2).

10. Mécanisme selon la revendication 8, **caractérisé par le fait que** ledit attelage axial est assuré par une rondelle d'attelage (190) maintenue par un rebord globalement parallèle aux extensions (172) prolongeant un retour s'étendant axialement en traversant des trous (22) du diaphragme (2), dans lesquels débouchent les fentes radiales délimitant les doigts (23) du diaphragme (2), et prolongeant lui-même les extrémités libres des extensions (172).

11. Mécanisme selon l'une des revendications 8 à 10, **caractérisé par le fait que** l'appui secondaire (141) pour le diaphragme (2) est constitué par des rebords transversaux prolongeant des retours axiaux traversant des trous (22) du diaphragme (2), dans lesquels débouchent les fentes radiales délimitant les doigts (23) du diaphragme (2), lesdits retours axiaux prolongeant eux-mêmes des pattes rigides (140) découpées dans le fond (80) du couvercle (8), l'appui secondaire (141) étant disposé radialement intérieurement par rapport à l'appui primaire (181).

12. Mécanisme selon la revendication 11, **caractérisé par le fait que** chaque patte rigide (140) est circonférentiellement disposée entre deux extensions (172).

13. Mécanisme selon l'une des revendications 1 à 12, **caractérisé par le fait qu'**il est équipé d'un dispositif de rattrapage d'usure (90) d'au moins des garnitures (6) de la friction d'embrayage (5).

## Claims

1. A clutch mechanism for a friction clutch, especially for motor vehicles, comprising a cover plate (8) with a transversely oriented base (80) and fastening means for securing the clutch mechanism on a rotary driving flywheel, a pressure plate (3) having at the front a friction face (30) for cooperation with a clutch friction wheel (5), means for coupling the pressure plate (3) and cover plate (8) together in rotation with axial mobility, and, interposed between the pressure plate (3) and the base (80) of the cover plate (8), a diaphragm (2) having an outer peripheral portion (21) for biasing the pressure plate (3) axially away from the base (80) of the cover plate (8) and extended inwards by fingers (23) for counteracting, as required, the action of the said peripheral portion (21), resilient assistance means (7) acting on the fingers (23) of the diaphragm (2) in the declutching direction by bearing on the cover plate (8), **characterised by** the fact that the resilient assistance means (7) are an integral part of the base (80) of the cover plate (8).

2. A mechanism according to Claim 1, **characterised by** the fact that the elastic characteristics of the resilient assistance means (7) are so chosen that, when the clutch is engaged, the clutch friction wheel (5) being new, the force exerted by the resilient assistance means (7) is weak.

3. A mechanism according to Claim 1 or Claim 2, **characterised by** the fact that the elastic characteristics of the resilient assistance means (7) are so chosen that, during the declutching operation, the force exerted by the resilient assistance means (7) increases and then decreases down to a value which is very small, or even zero, when the clutch is disengaged.

4. A mechanism according to one of Claims 1 to 3, **characterised by** the fact that the resilient assistance means include extensions (72, 172) extending generally towards the free end of the fingers (23) of the diaphragm (2).

5. A mechanism according to Claim 4, **characterised by** the fact that the said extensions (72, 172) extend radially.

6. A mechanism according to Claim 4 or Claim 5, the mechanism being of the push-to-release type, **characterised by** the fact that the extensions (72) are located radially inwards of primary (81) and secondary (41) abutments for the diaphragm (2), which are carried by the base (80) of the cover plate (8).

7. A mechanism according to Claim 6, **characterised by** the fact that the extensions (72) are joined at their ends by an annular ring (71) which is adapted to cooperate with the fingers (23) of the diaphragm (2).

8. A mechanism according to one of Claims 4 to 6, the mechanism being of the push-to-release type, **characterised by** the fact that the extensions (172) carry the primary abutment (181) for the diaphragm (2).

9. A mechanism according to Claim 8, **characterised by** the fact that the extensions (172) are engaged axially on the diaphragm (2).

10. A mechanism according to Claim 8, **characterised by** the fact that the said axial engagement is provided by an attachment ring (190), which is held in place by a flange generally parallel to the extensions (172), the flange being an extension of a return portion extending axially through holes (22) in the diaphragm (2), into which the radial slots that define the fingers (23) of the diaphragm (2) are open, and itself extending the length of the free ends of the extensions (172).

11. A mechanism according to one of Claims 8 to 10, **characterised by** the fact that the secondary abutment (141) for the diaphragm (2) consist of the transverse flanges that extend the length of axial returns which extend through holes (22) in the diaphragm (2) into which the radial slots that bound the fingers (23) of the diaphragm (2) are open, the said axial returns themselves extending the length of the rigid lugs (14) which are press-formed in the base (80) of the coyer plate (8), the secondary abutment (141) being disposed radially inwards of the primary abutment (181).

12. A mechanism according to Claim 11, **characterised by** the fact that each rigid lug (140) is disposed circumferentially between two extensions (172).

13. A mechanism according to one of Claims 1 to 12, **characterised by** the fact that it is equipped with a wear take-up device (90) for at least the liners (6) of the friction clutch (5).

## Patentansprüche

1. Kupplungsmechanismus für eine Reibungskupplung, insbesondere für Kraftfahrzeuge, umfassend einen Deckel (8) mit einem quer ausgerichteten Boden (80) und Befestigungsmitteln zur Befestigung des Kupplungsmechanismus an einem Drehantriebsschwungrad, eine Druckplatte (3), die stirnseitig eine Reibfläche (30) für das Zusammenwirken mit einer Reibungskupplungsscheibe (5) aufweist, Mittel für die axial bewegliche, drehfeste Verbindung der Druckplatte (3) mit dem Deckel (8) und, eingefügt zwischen der Druckplatte (3) und dem Boden (80) des Deckels (8), eine Membranfeder (2) mit einem äußeren Umfangsteil (21), der die Druckplatte (3) in der zum Boden (80) des Deckels (8) entgegengesetzten Richtung axial beaufschlagt und der nach innen durch Finger (23) verlängert wird, um der Wirkung des besagten Umfangsteils (21) beliebig entgegenzuwirken, wobei elastische Unterstützungsmittel (7) in der Ausrückrichtung auf die Finger (23) der Membranfeder (2) einwirken, indem sie auf dem Deckel (8) zur Auflage kommen,
**dadurch gekennzeichnet,**
**daß** die elastischen Unterstützungsmittel (7) ein integrierender Bestandteil des Bodens (80) des Deckels (8) sind.

2. Mechanismus nach Anspruch 1, **dadurch gekennzeichnet, daß** die Elastizitätseigenschaften der elastischen Unterstützungsmittel (7) so gewählt sind, daß bei eingerückter Kupplung und bei neuer Reibungskupplungsscheibe (5) die durch die elastischen Unterstützungsmittel (7) ausgeübte Wirkung gering ausfällt.

3. Mechanismus nach einem der Ansprüche 1 oder 2, **dadurch gekennzeichnet, daß** die Elastizitätseigenschaften der elastischen Unterstützungsmittel (7) so gewählt sind, daß während des Ausrückvorgangs die durch die elastischen Unterstützungsmittel (7) ausgeübte Kraft zunimmt und anschließend bis zu einem sehr niedrigen Wert bzw. einem Wert gleich null abnimmt, wenn die Kupplung ausgerückt ist.

4. Mechanismus nach einem der Ansprüche 1 bis 3, **dadurch gekennzeichnet, daß** die elastischen Unterstützungsmittel (7) Erweiterungen (72, 172) umfassen, die sich insgesamt zum freien Ende der Finger (23) der Membranfeder (2) erstrecken.

5. Mechanismus nach Anspruch 4, **dadurch gekennzeichnet, daß** sich die Erweiterungen (72, 172) radial erstrecken.

6. Mechanismus nach einem der Ansprüche 4 oder 5, wobei der Mechanismus in gedrückter Konstruktion ausgeführt ist, **dadurch gekennzeichnet, daß** die Erweiterungen (72) radial innerhalb der am Boden (80) des Deckels (8) angebrachten Primär- (81) und Sekundärauflagen (41) für die Membranfeder (2) angeordnet sind.

7. Mechanismus nach Anspruch 6, **dadurch gekennzeichnet, daß** die Erweiterungen (72) an ihren Enden durch einen Ring (71) verbunden sind, der dazu bestimmt ist, mit den Fingern (23) der Membranfeder (2) zusammenzuwirken.

8. Mechanismus nach einem der Ansprüche 4 bis 6, wobei der Mechanismus in gedrückter Konstruktion ausgeführt ist, **dadurch gekennzeichnet, daß** die Erweiterungen (172) die Primärauflage (181) für die Membranfeder (2) tragen.

9. Mechanismus nach Anspruch 8, **dadurch gekennzeichnet, daß** die Erweiterungen (172) axial an der Membranfeder (2) angefügt sind.

10. Mechanismus nach Anspruch 9, **dadurch gekennzeichnet, daß** die axiale Anfügung durch eine Anfügescheibe (190) erfolgt, die durch eine Randleiste gehalten wird, die insgesamt parallel zu den Erweiterungen (172) verläuft und einen Rücksprung verlängert, der sich axial erstreckt, wobei er durch Löcher (22) der Membranfeder (2) hindurchgeht, in denen die radialen Schlitze münden, die die Finger (23) der Membranfeder (2) begrenzen, und der seinerseits die freien Enden der Erweiterungen (172) verlängert.

11. Mechanismus nach einem der Ansprüche 8 bis 10, **dadurch gekennzeichnet, daß** die Sekundärauflage (141) für die Membranfeder (2) aus Querrandleisten besteht, die axiale Rücksprünge verlängern, die durch Löcher (22) der Membranfeder (2) hindurchgehen, in denen die radialen Schlitze münden, die die Finger (23) der Membranfeder (2) begrenzen, wobei die axialen Rücksprünge ihrerseits starre Ansätze (140) verlängern, die aus dem Boden (80) des Deckels (8) ausgeschnitten sind, wobei die Sekundärauflage (141) im Verhältnis zur Primärauflage (181) radial innen angeordnet ist.

12. Mechanismus nach Anspruch 11, **dadurch gekennzeichnet, daß** jeder starre Ansatz (140) umfangsmäßig zwischen zwei Erweiterungen (172) angeordnet ist.

13. Mechanismus nach einem der Ansprüche 1 bis 12, **dadurch gekennzeichnet, daß** er mit einer Verschleißnachstellvorrichtung (90) wenigstens für die Reibbeläge (6) der Reibungskupplungsscheibe (5) ausgerüstet ist.
